# EUROPÄISCHE PATENTSCHRIFT

(11) **EP 2 422 173 B1**
(45) Veröffentlichungstag und Bekanntmachung des Hinweises auf die Patenterteilung: **17.02.2016**
(21) Anmeldenummer: 10739290.4
(22) Anmeldetag: 22.04.2010
(51) Int. Cl.: G01L 1/24, G01B 11/16, G02B 1/04, G02B 6/44, G02B 6/02

(54) **OPTISCHE DEHNUNGSMESSVORRICHTUNG MIT FASER-BRAGG-GITTER**
OPTICAL STRAIN MEASURING DEVICE COMPRISING A FIBRE BRAGG GRATING
DISPOSITIF OPTIQUE DE MESURE D'ALLONGEMENT À FIBRE À RÉSEAU DE BRAGG

(30) Priorität: 22.04.2009 DE 102009018206
(43) Veröffentlichungstag der Anmeldung: 29.02.2012
(73) Patentinhaber: Hottinger Baldwin Messtechnik GmbH, 64293 Darmstadt (DE)
(72) Erfinder: KREUZER, Manfred, 64331 Weiterstadt (DE); HAASE, Karl-Heinz, 64319 Pfungstadt (DE); KIPP, Tobias, 63322 Rödermark (DE); MAUL, Jochen, 55118 Mainz (DE); RUPPIN, Hagen, 64569 Nauheim (DE); SCHULZ, Rudolf, 64331 Weiterstadt (DE); GÜNTHER, Bernd, 76185 Karlsruhe (DE)
(74) Vertreter: Staudte, Ralph
(86) Internationale Anmeldenummer: PCT/DE2010/000460
(87) Internationale Veröffentlichungsnummer: WO 2010/121605

(56) Entgegenhaltungen:
- DE-A1-102007 008 464
- US-A1- 2003 066 356
- US-A1- 2006 159 407
- US-A1- 2006 200 049

## Beschreibung

Die Erfindung betrifft eine optische Dehnungsmessvorrichtung, die eine Glasfaser mit einem Faser-Bragg-Gitter als Dehnungssensor verwendet. Die Nutzung der Änderung optischer Eigenschaften von Materialien für die Messung von Materialdehnungen ist aus dem Stand der Technik hinreichend bekannt, insbesondere hinsichtlich der Theorie. Eine solche Anordnung ist z. B. in dem Dokument DE 100 04 384 C2 gezeigt.

Jede derartige Dehnungsmessvorrichtung besteht aus wenigstens einem Sensor mit einer wenigstens ein Faser-Bragg-Gitter aufweisenden Glasfaser und einer Signalleitung, die ebenfalls eine Glasfaser aufweist.

Die Glasfaserdehnungssensoren sind so ausgebildet, dass sie die zu messende Dehnung möglichst fehlerfrei erfassen. Prinzipiell gibt es zwei Gruppen dieser Sensoren. Bei der ersten Gruppe ist die zur Messung verwendete Glasfaser in einem robusten Gehäuse angeordnet. Dieses Gehäuse wird an der Messstelle befestigt, z. B. festgeschraubt, wie in den Dokumenten DE100 31 412 C2, DE 39 02 997 C1, US 4,761,073 oder DE 297 11 958 U1 beschrieben. Der Vorteil dieser Ausführungsformen besteht darin, dass diese eingehausten Sensoren gut handhabbar sind und auch deren Befestigung am Messobjekt leicht möglich ist. Vor oder nach der Befestigung wird die in dem Gehäuse angeordnete Dehnungsmessfaser mit einer Glasfaser-Signalleitung verbunden, wobei unterschiedliche Verbindungskonstruktionen aus dem Stand der Technik bekannt sind, wie z. B. Steckverbinder. Diese Art von Sensoren und die dazugehörigen Signalleitungen mit ihren Anschlüssen sind voluminös und können daher nur an solchen Messstellen eingesetzt werden, an denen genügend Platz vorhanden ist.

Ein weiteres Applikationsproblem besteht darin, dass das Faser-Bragg-Gitter an einer vorbestimmten Messstelle appliziert werden muss. Es ist daher erforderlich, die Lage des Faser-Bragg-Gitters genau zu kennen. Bei den vorstehend beschriebenen eingehausten Sensoren gibt es einen geometrischen Zusammenhang zwischen den Gehäuseaußenkanten und der Lage des Faser-Bragg-Gitters. Insofern gibt es auch keine Probleme bei der Anordnung und genauen Ausrichtung des Sensors über der Messstelle.

Es gibt jedoch eine Reihe von Messaufgaben, bei denen die Dehnung an räumlich schwer zugänglichen Stellen gemessen werden soll. Hier können Sensoren mit voluminösen Gehäusen nicht angewendet werden. Für diese Anwendungsfälle werden z. B. Sensoren verwendet, die in flexiblen Folien eingebettet sind, wie in den Dokumenten DE 10 2007 008 464 A1 oder US 6,720,553 B2 gezeigt. Diese Sensoren weisen ein geringeres Volumen auf und sind daher auch an Stellen applizierbar, an denen Sensoren mit einem festen, voluminösen Gehäuse keinen Platz finden.

In dem Dokument US 2003/0066356 A1 ist ein Dehnungssensor beschrieben, bei dem eine Glasfaser mit einem Bragg-Gitter zwischen Schichten aus Poly-Ether-Ether-Keton eingebettet ist.

Unter beengten räumlichen Verhältnissen sind jedoch auch derartige Sensoren schwer zu applizieren, weil die dazu erforderlichen Handgriffe unter den räumlich beengten Bedingungen nicht optimal durchgeführt werden können. Besonders problematisch ist die Ausrichtung des Faser-Bragg-Gitters an der Messstelle, weil auf den Folien aufgebrachte Markierungen und Positionierungsmarken unter eingeschränkten räumlichen Bedingungen u. U. schlecht erkennbar sind.

Häufig treten neben den räumlichen Einschränkungen an der Messstelle noch weitere erschwerende Bedingungen durch aggressive Umwelteinflüsse hinzu, sodass die Sensoren und die Signalleitungen dagegen geschützt sein müssen. Insbesondere die Koppelstelle zwischen dem Sensor und der Signalleitung muss besonders gut geschützt werden, wozu ein erhöhter Aufwand erforderlich ist.

Es ist demzufolge eine Aufgabe der Erfindung, eine Messtechnik bereitzustellen, mit der auch unter räumlichen Einschränkungen mit geringem Aufwand eine Dehnungsmessung durchführbar ist. Insbesondere soll der Dehnungssensor einfach befestigbar und das Faser-Bragg-Gitter der Messstelle genau zuordenbar sein. Weiterhin sollen die Signalleitung und der Dehnungssensor mechanisch robust und weitgehend unempfindlich gegen Wasser und aggressive Substanzen sein. Eine weitere Aufgabe der Erfindung besteht darin, ein Verfahren zur Herstellung einer derartigen Messtechnik bereitzustellen.

Diese Aufgaben werden mit einer optischen Dehnungsmessvorrichtung nach Anspruch 1 und einem Verfahren nach Anspruch 10 gelöst.

Nach Anspruch 1 weist die optische Dehnungsmessvorrichtung eine Glasfaser mit einem Bragg-Gitter und einem Mantel auf, wobei der Mantel folgende Zusammensetzung aufweist: eine Mischung aus Poly-Ether-Ether-Keton und einem anorganischen Füllstoff in einer Zumischung von wenigstens 10 Gewichtsprozenten und maximal 40 Gewichtsprozenten bei einer Korngröße von 0,08 µm bis 12 µm. Der Außendurchmesser des Mantels beträgt 0,2 mm bis 1,2 mm. Das Verhältnis D/d zwischen dem Außendurchmesser D des Mantels und dem Durchmesser d der Glasfaser beträgt 2 bis 6. Ein Druck des Mantels auf die Glasfaser ist derart, dass im Wesentlichen keine Relativbewegung zwischen der Glasfaser und dem Mantel auftreten kann. Der Druck des Mantels bewirkt ein Einkrallen von Partikeln des Füllstoffs in die Glasfaser, sodass dieser Effekt erreicht wird.

Es ist mit der erfindungsgemäßen optischen Dehnungsmessvorrichtung gelungen, unterschiedlichste Anforderungen zu erfüllen. Der Vorteil der erfindungsgemäßen optischen Dehnungsmessvorrichtung besteht darin, dass die Einheit von Sensor und Signalleitung zu einer äußerst robusten optischen Dehnungsmessvorrichtung führt, die eine sehr genaue Zuordnung des Faser-Bragg-Gitters zur Messstelle auch unter eingeschränkten räumlichen Bedingungen ermöglicht. Die beanspruchte Geometrie in Kombination mit der beanspruchten Zusammensetzung des Überzuges bzw. Mantels bewirkt, dass das Faser-Bragg-Gitter mittels eines harten mechanischen Gegenstandes wie z. B. eines Schraubenziehers sehr genau lokalisierbar ist. Dazu wird der Gegenstand mit einem vorbestimmten Druck über den Mantel gezogen. Das Mantelmaterial wird dadurch geringfügig deformiert und dadurch auch das Faser-Bragg-Gitter. Die durch die Faser-Bragg-Gitter-Deformation entstandenen Änderungen der optischen Eigenschaften des Faser-Bragg-Gitters werden mithilfe einer Auswerteelektronik detektiert. Das ermöglicht eine äußerst präzise Lokalisierung des Faser-Bragg-Gitters in Längserstreckung der erfindungsgemäßen optischen Dehnungsmessvorrichtung, sodass die Dehnungsmessvorrichtung auch unter beengten Applikationsbedingungen noch präzise Messergebnisse liefert.

Die erfindungsgemäße optische Dehnungsmessvorrichtung hat jedoch neben der einfachen und präzisen Lokalisierbarkeit des Faser-Bragg-Gitters auch solche Eigenschaften, die von einer optimalen Signalleitung erwartet werden. Besonders hervorzuheben sind eine ausreichende Plastizität und Robustheit, die es ermöglichen, die Leitungsabschnitte mit der Hand vorzuformen, um sie dann in räumlich beengte Messstellen einfädeln und kleben oder auf andere Art und Weise befestigen zu können. Wäre die erfindungsgemäße optische Dehnungsmessvorrichtung zu elastisch, könnte die Vorformung nicht vorgenommen Werden. Ein zu befestigender Faserabschnitt würde sich aufgrund seiner federelastischen Rückstellkraft nicht gut kleben lassen, sodass zusätzliche Fixierhilfen erforderlich wären. Der Einsatz derartiger Fixierhilfen ist jedoch bei beengten räumlichen Verhältnissen an der Messstelle oft nicht möglich. Wenn die erfindungsgemäße optische Dehnungsmessvorrichtung jedoch zu steif wäre, könnte sie nicht verformt werden oder sie würde knicken, wodurch die Glasfaser brechen würde.

Weiterhin weist die gewählte Zusammensetzung für den Mantel gegenüber vielen Chemikalien eine hohe Resistenz auf, sodass die erfindungsgemäße optische Dehnungsmessvorrichtung auch in rauer Industrieumgebung ohne aufwendige Schutzmaßnahmen einsetzbar ist.

Ein weiterer Vorteil der erfindungsgemäßen optischen Dehnungsmessvorrichtung besteht darin, dass ein Bruch der Glasfaser bereits mit dem bloßen Auge je nach Helligkeit der Umgebung über wenigstens 2 m erkennbar ist. Dazu wird an dem Faserende eine Laserlichtquelle angeschlossen. Das Licht tritt an der Faserbruchstelle aus und wird durch die spezielle Zusammensetzung des transparenten Mantels gut gestreut und somit gut sichtbar. Dieser Vorteil ist interessant, weil bei umfangreichen Applikationen mit einer Vielzahl von Messleitungen der Fehler schnell gefunden wird.

Nach Anspruch 2 beträgt der Druck des Mantels auf die Glasfaser wenigstens 120 N/mm². Bei einem derartigen Druck kann im Wesentlichen keine Relativbewegung zwischen der Glasfaser und dem Mantel auftreten, und es ist eine genaue Dehnungsmessung möglich.

Nach Anspruch 3 weist die Glasfaser einen Glaskern mit einer Beschichtung aus einem anorganisch-organischen Hybridpolymer auf. Die Beschichtung bzw. das Coating aus einem anorganisch-organischen Hybridpolymer hat eine chemische Stabilität, die für einen Prozess des Extrudierens des Mantels auf die Glasfaser bei der Herstellung der optischen Dehnungsmessvorrichtung ausreicht. Dies ist bei den sonst typischerweise verwendeten Coatings aus Acrylat und Polyimid nicht der Fall.

Nach Anspruch 4 ist der anorganische Füllstoff ein Silikat, nach Anspruch 5 ist der anorganische Füllstoff ein Schichtsilikat, und nach Anspruch 6 ist der anorganische Füllstoff Talkum, Kreide, Kalziumkarbonat, Bariumsulfat, Bornitrid, Siliziumdioxid oder Bentonit. Die genannten Füllstoffe können die vorstehend aufgeführten Eigenschaften der erfindungsgemäßen optischen Dehnungsmessvorrichtung ermöglichen.

Nach Anspruch 7 beträgt die Zumischung des anorganischen Füllstoffs wenigstens 25 Gewichtsprozente und maximal 40 Gewichtsprozente. Dadurch kann eine weitere Verbesserung der plastischen Eigenschaften erreicht werden.

Nach Anspruch 8 beträgt die Zumischung des anorganischen Füllstoffs wenigstens 27 Gewichtsprozente und maximal 33 Gewichtsprozente. So kann eine noch weitere Verbesserung der plastischen Eigenschaften erreicht werden.

Nach Anspruch 9 beträgt die Korngröße wenigstens 0,1 µm und maximal 10 µm. Diese Korngröße ermöglicht eine gute Verbindung zwischen dem Mantel und der Glasfaser.

Nach Anspruch 10 weist ein Verfahren zur Herstellung einer optischen Dehnungsmessvorrichtung die nachfolgenden Schritte auf: Bereitstellen einer Glasfaser mit einem Bragg-Gitter und Extrudieren eines Mantels auf die Glasfaser. Dabei weist der Mantel folgende Zusammensetzung auf: eine Mischung aus Poly-Ether-Ether-Keton und einem anorganischen Füllstoff in einer Zumischung von wenigstens 10 Gewichtsprozenten und maximal 40 Gewichtsprozenten bei einer Korngröße von 0,08 µm bis 12 µm. Der Außendurchmesser des Mantels beträgt 0,2 mm bis 1,2 mm. Das Verhältnis D/d zwischen dem Außendurchmesser D des Mantels und dem Durchmesser d der Glasfaser beträgt 2 bis 6. Nach Beendigung des Verfahrens ist ein Druck des Mantels auf die Glasfaser derart, dass im Wesentlichen keine Relativbewegung zwischen der Glasfaser und dem Mantel auftreten kann. Der Druck des Mantels bewirkt ein Einkrallen von Partikeln des Füllstoffs in die Glasfaser, sodass dieser Effekt erreicht wird.

Eine mit dem erfindungsgemäßen Verfahren hergestellte optische Dehnungsmessvorrichtung hat die vorstehend ausführlich beschriebenen vorteilhaften Eingenschaften.

Nach Anspruch 11 werden Parameter des Extrudierens derart gewählt, dass nach Beendigung des Verfahrens der Druck des Mantels auf die Glasfaser wenigstens 120 N/mm² beträgt. Bei einem derartigen Druck kann im Wesentlichen keine Relativbewegung zwischen der Glasfaser und dem Mantel auftreten, und es ist eine genaue Dehnungsmessung möglich.

Nach Anspruch 12 weist der Schritt des Bereitstellens einer Glasfaser den Schritt des Bereitstellens eines Glaskerns und den Schritt des Beschichtens des Glaskerns mit einer Beschichtung aus einem anorganisch-organischen Hybridpolymer auf. Die Beschichtung bzw. das Coating aus einem anorganischorganischen Hybridpolymer hat eine chemische Stabilität, die für den Prozess des Extrudierens des Mantels auf die Glasfaser bei der Herstellung der optischen Dehnungsmessvorrichtung ausreicht. Dies ist bei den sonst typischerweise verwendeten Coatings aus Acrylat und Polyimid nicht der Fall.

Nach Anspruch 13 ist der anorganische Füllstoff ein Silikat, nach Anspruch 14 ist der anorganische Füllstoff ein Schichtsilikat, und nach Anspruch 15 ist der anorganische Füllstoff Talkum, Kreide, Kalziumkarbonat, Bariumsulfat, Bornitrid, Siliziumdioxid oder Bentonit. Die genannten Füllstoffe können die vorstehend aufgeführten Eigenschaften der erfindungsgemäßen optischen Dehnungsmessvorrichtung ermöglichen.

Die Erfindung wird nachfolgend anhand eines Ausführungsbeispiels in Verbindung mit schematischen Zeichnungen näher erläutert:
- Fig. 1: zeigt eine optische Dehnungsmessvorrichtung gemäß dem Ausführungsbeispiel im Längsschnitt in vergrößerter Darstellung.
- Fig. 2: zeigt die optische Dehnungsmessvorrichtung gemäß dem Ausführungsbeispiel im Querschnitt in vergrößerter Darstellung.
- Fig. 3: zeigt ein Flussdiagramm, das grundlegende Schritte eines Verfahrens zur Herstellung der optischen Dehnungsmessvorrichtung gemäß dem Ausführungsbeispiel veranschaulicht.

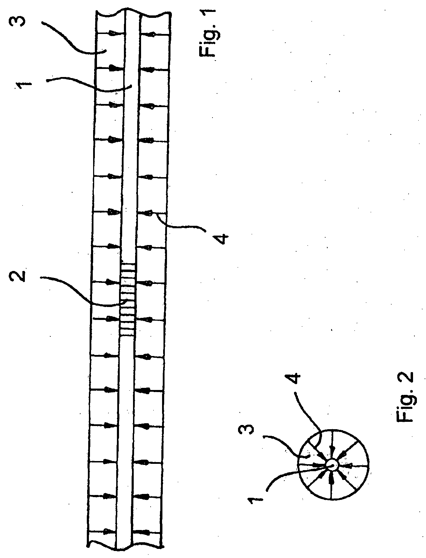

Die Fig. 1 zeigt eine optische Dehnungsmessvorrichtung gemäß dem Ausführungsbeispiel im Längsschnitt in vergrößerter Darstellung. Mit Bezugszeichen 1 ist eine Glasfaser, mit Bezugszeichen 2 ein Bragg-Gitter und mit Bezugszeichen 3 eine Umhüllung bzw. ein Mantel bezeichnet. Pfeile 4 symbolisieren einen Druck des Mantels 3 auf die Glasfaser 1.

Die Fig. 2 zeigt die optische Dehnungsmessvorrichtung gemäß dem Ausführungsbeispiel im Querschnitt in vergrößerter Darstellung. Die Glasfaser 1 ist koaxial in der Umhüllung bzw. dem Mantel 3 angeordnet.

Der Mantel 3 kann folgende Zusammensetzung aufweisen: eine Mischung aus Poly-Ether-Ether-Keton und einem anorganischen Füllstoff in einer Zumischung von beispielsweise wenigstens 10 Gewichtsprozenten und maximal 40 Gewichtsprozenten bei einer Korngröße von z. B. 0,08 µm bis 12 µm. Nachstehend ist das Poly-Ether-Ether-Keton als PEEK bezeichnet, während die Mischung aus PEEK und dem anorganischen Füllstoff als PEEKF bezeichnet ist.

Bei dem anorganischen Füllstoff kann es sich beispielsweise um Talkum (Magnesiumsilikathydrat, Mg3Si4O10(OH)2), Kreide, Kalziumkarbonat (CaCO3), Bariumsulfat (BaSO4), Bornitrid (BN), Siliziumdioxid (SiO2), Bentonit (Hauptbestandteil (60-80%) Montmorillonit (Aluminiumschichtsilikat, Al2[(OH)2 / Si4O10] n H2O)), Quarz (SiO2), Aluminiumoxid (Al2O3), Siliziumcarbid (SiC), Glashohlkügelchen, gefällte Kieselsäure, Zinksulfid (ZnS) oder Titanoxid (TiO2) handeln.

Die Glasfaser 1 kann einen Glaskern 5 mit dem Bragg-Gitter 2 und ein Coating bzw. eine Beschichtung 6 aufweisen. Bei dem Material der Beschichtung 6 kann es sich beispielsweise um ORMOCER^{®}, d. h. ein anorganisch-organisches Hybridpolymer, handeln.

Der Außendurchmesser D des Mantels 3 kann z. B. 0,2 mm bis 1,2 mm betragen. Das Verhältnis D/d zwischen dem Außendurchmesser D des Mantels 3 und dem Durchmesser d der Glasfaser 1 kann beispielsweise 2 bis 6 betragen. Bei dem Ausführungsbeispiel beträgt der Durchmesser d der Glasfaser 1 0,185 mm, und der Außendurchmesser D des Mantels 3 beträgt 0,6 mm. Der Mantel 3 besteht aus PEEKF mit Talkum als Füllstoff in einer Zumischung von 30 Gewichtsprozenten bei einer Körngröße von 0,1 µm bis 10 µm. Der Mantel 3 wurde mit einem Extrudierverfahren auf die Glasfaser 1 aufgebracht und umschließt die Glasfaser 1 mit einem vorbestimmten Druck, der größer als 0 ist. Der konzentrische Druckverlauf ist mit den Pfeilen 4 bezeichnet.

Der Druck des Mantels 3 auf die Glasfaser 1 kann derart sein, dass im Wesentlichen keine Relativbewegung zwischen der Glasfaser 1 und dem Mantel 3 auftreten kann und eine genaue Dehnungsmessung möglich ist. Dabei kann der Druck des Mantels 3 auf die Glasfaser 1 beispielsweise zwischen 120 N/mm² und 216 N/mm² betragen.

Der Mantel 3, in dem der anorganische Füllstoff verteilt ist, wird bei der Herstellung der optischen Dehnungsmessvorrichtung in einem Extrudierverfahren auf die Glasfaser 1 aufgebracht. Der Extrudierprozess erfolgt bei hoher Temperatur, da der Schmelzpunkt von PEEKF oberhalb von 370°C liegt. Beim langsamen Abkühlen und ab einer Temperaturgrenze, bei der die Verfestigung das PEEKF beginnt, entsteht pro Grad Abkühlung ein Druck durch den Unterschied der Ausdehnungen bei den Materialien der Glasfaser 1 und des Mantels 3. Beispielsweise kann Glas einen Ausdehnungskoeffizienten von 0,5 ppm/K und PEEKF einen Ausdehnungskoeffizienten von 25 ppm/K aufweisen, wobei sich ein Delta von 24,5 ppm/K ergibt. Die Temperaturgrenze, bei der die Verfestigung das PEEKF beginnt, kann z. B. bei etwa 170 °C liegen. Dann ergibt sich beispielsweise bei einer Abkühlung von ca. 170 °C bis ca. 20 °C folgende beispielhafte Rechnung: 150 K x 24,5 ppm/K.

Somit führen die unterschiedlichen Ausdehnungen der Materialien der Glasfaser 1 und des Mantels 3 zu einem Schrumpfprozess, der in einer Schrumpfverbindung zwischen dem Mantel 3 und der Glasfaser 1 resultiert. Dabei krallt sich der Mantel 3 regelrecht an der Glasfaser 1 fest. Dies wird durch spezifische Parameter des Extrudierens und die spezifische Zusammensetzung des Mantelmaterials PEEKF erreicht.

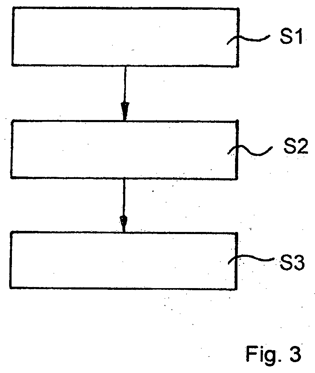

Die Fig. 3 zeigt ein Flussdiagramm, das grundlegende Schritte eines Verfahrens zur Herstellung der optischen Dehnungsmessvorrichtung gemäß dem Ausführungsbeispiel veranschaulicht. In einem Schritt S1 wird der Glaskern 5 mit dem Bragg-Gitter 2 bereitgestellt. In einem Schritt S2 wird der Glaskern 5 mit der Beschichtung 6 beschichtet. Die Schritte S1 und S2 bilden zusammen einen Schritt des Bereitstellens der Glasfaser 1. In einem Schritt S3 wird der Mantel 3 auf die Glasfaser 1 extrudiert.

Der Schritt S1 des Bereitstellens des Glaskerns 5 mit dem Bragg-Gitter 2 kann einen Schritt des Bereitstellens des Glaskerns 5 und einen Schritt des Versehens des Glaskerns 5 mit dem Bragg-Gitter 2 aufweisen.

Bei dem Verfahren zur Herstellung der optischen Dehnungsmessvorrichtung gemäß dem Ausführungsbeispiel können die Parameter des Extrudierens so gewählt werden, dass nach Beendigung des Verfahrens ein Druck des Mantels 3 auf die Glasfaser 1 derart ist, dass im Wesentlichen keine Relativbewegung zwischen der Glasfaser 1 und dem Mantel 3 auftreten kann und eine genaue Dehnungsmessung möglich ist. Dabei kann der Druck des Mantels 3 auf die Glasfaser 1 beispielsweise zwischen 120 N/mm² und 216 N/mm² betragen.

## Patentansprüche

1. Optische Dehnungsmessvorrichtung mit einer Glasfaser (1) mit einem Bragg-Gitter (2) und einem Mantel (3), **dadurch gekennzeichnet, dass**:
- der Mantel (3) folgende Zusammensetzung aufweist: eine Mischung aus Poly-Ether-Ether-Keton und einem anorganischen Füllstoff in einer Zumischung von wenigstens 10 Gewichtsprozenten und maximal 40 Gewichtsprozenten bei einer Korngröße von 0,08 µm bis 12 µm,
- der Außendurchmesser des Mantels (3) 0,2 mm bis 1,2 mm beträgt,
- das Verhältnis D/d zwischen dem Außendurchmesser D des Mantels (3) und dem Durchrriesser d der Glasfaser (1) 2 bis 6 beträgt, und
- ein Druck des Mantels (3) auf die Glasfaser (1) derart ist, dass im Wesentlichen keine Relativbewegung zwischen der Glasfaser (1) und dem Mantel (3) auftreten kann.

2. Optische Dehnungsmessvorrichtung nach Anspruch 1, wobei der Druck des Mantels (3) auf die Glasfaser (1) wenigstens 120 N/mm² beträgt.

3. Optische Dehnungsmessvorrichtung nach Anspruch 1, wobei die Glasfaser (1) einen Glaskern (5) mit einer Beschichtung (6) aus einem anorganisch-organischen Hybridpolymer aufweist.

4. Optische Dehnungsmessvorrichtung nach Anspruch 1, wobei der anorganische Füllstoff ein Silikat ist.

5. Optische Dehnungsmessvorrichtung nach Anspruch 1, wobei der anorganische Füllstoff ein Schichtsilikat ist.

6. Optische Dehnungsmessvorrichtung nach Anspruch 1, wobei der anorganische Füllstoff Talkum, Kreide, Kalziumkarbonat, Bariumsulfat, Bornitrid, Siliziumdioxid oder Bentonit ist.

7. Optische Dehnungsmessvorrichtung nach Anspruch 1, wobei die Zumischung des anorganischen Füllstoffs wenigstens 25 Gewichtsprozente und maximal 40 Gewichtsprozente beträgt.

8. Optische Dehnungsmessvorrichtung nach Anspruch 1, wobei die Zumischung des anorganischen Füllstoffs wenigstens 27 Gewichtsprozente und maximal 33 Gewichtsprozente beträgt.

9. Optische Dehnungsmessvorrichtung nach Anspruch 1, wobei die Korngröße wenigstens 0,1 µm und maximal 10 µm beträgt.

10. Verfahren zur Herstellung einer optischen Dehnungsmessvorrichtung, mit den Schritten:
- Bereitstellen (S1, S2) einer Glasfaser (1) mit einem Bragg-Gitter (2), und
- Extrudieren (S3) eines Mantels (3) auf die Glasfaser (1), **dadurch gekennzeichnet, dass**:
- der Mantel (3) folgende Zusammensetzung aufweist: eine Mischung aus Poly-Ether-Ether-Keton und einem anorganischen Füllstoff in einer Zumischung von wenigstens 10 Gewichtsprozenten und maximal 40 Gewichtsprozenten bei einer Korngröße von 0,08 µm bis 12 µm,
- der Außendurchmesser des Mantels (3) 0,2 mm bis 1,2 mm beträgt,
- das Verhältnis D/d zwischen dem Außendurchmesser D des Mantels (3) und dem Durchmesser d der Glasfaser (1) 2 bis 6 beträgt, und
- nach Beendigung des Verfahrens ein Druck des Mantels (3) auf die Glasfaser (1) derart ist, dass im Wesentlichen keine Relativbewegung zwischen der Glasfaser (1) und dem Mantel (3) auftreten kann.

11. Verfahren nach Anspruch 10, wobei Parameter des Extrudierens derart gewählt werden, dass nach Beendigung des Verfahrens der Druck des Mantels (3) auf die Glasfaser (1) wenigstens 120 N/mm² beträgt.

12. Verfahren nach Anspruch 10, wobei der Schritt des Bereitstellens einer Glasfaser (1) den Schritt (S1) des Bereitstellens eines Glaskerns (5) mit dem Bragg-Gitter (2) und den Schritt (S2) des Beschichtens des Glaskerns (5) mit einer Beschichtung (6) aus einem anorganisch-organischen Hybridpolymer aufweist.

13. Verfahren nach Anspruch 10, wobei der anorganische Füllstoff ein Silikat ist.

14. Verfahren nach Anspruch 10, wobei der anorganische Füllstoff ein Schichtsilikat ist.

15. Verfahren nach Anspruch 10, wobei der anorganische Füllstoff Talkum, Kreide, Kalziumkarbonat, Bariumsulfat, Bornitrid, Siliziumdioxid oder Bentonit ist.

## Claims

1. Optical strain measuring device comprising a glass fibre (1), which is provided with a Bragg grating (2) and a sheath (3), **characterized in that**:
- the sheath (3) comprises the following composition: a mixture of poly-ether ether ketone and an inorganic filler in an admixture of at least 10 percent by weight and maximum 40 percent by weight, with a particle size of 0.08 µm to 12 µm,
- the outside diameter of the sheath (3) is 0.2 mm to 1.2 mm,
- the ratio D/d between the outside diameter D of the sheath (3) and the diameter d of the glass fibre (1) is 2 to 6, and
- a pressure of the sheath (3) on the glass fibre (1) is such that essentially no relative movement between the glass fibre (1) and the sheath (3) can occur.

2. Optical strain measuring device according to claim 1, wherein the pressure of the sheath (3) on the glass fibre (1) is at least 120 N/mm².

3. Optical strain measuring device according to claim 1, wherein the glass fibre (1) comprises a glass core (5) having a coating (6) of inorganic-organic hybrid polymer.

4. Optical strain measuring device according to claim 1, wherein the inorganic filler is a silicate.

5. Optical strain measuring device according to claim 1, wherein the inorganic filler is a laminated silicate.

6. Optical strain measuring device according to claim 1, wherein the inorganic filler is talcum, chalk, calcium carbonate, barium sulfate, boron nitride, silicon dioxide or bentonite.

7. Optical strain measuring device according to claim 1, wherein the admixture of the inorganic filler is at least 25 percent by weight and maximum 40 percent by weight.

8. Optical strain measuring device according to claim 1, wherein the admixture of the inorganic filler is at least 27 percent by weight and maximum 33 percent by weight.

9. Optical strain measuring device according to claim 1, wherein the particle size is at least 0.1 µm and maximum 10 µm.

10. Method of making an optical strain measuring device, which comprises the following steps:
- providing (S1, S2) of a glass fibre (1) with a Bragg grating (2), and
- extruding (S3) of a sheath (3) onto the glass fibre (1), **characterized in that**:
- the sheath (3) comprises the following composition: a mixture of poly-ether ether ketone and an inorganic filler in an admixture of at least 10 percent by weight and maximum 40 percent by weight, with a particle size of 0.08 µm to 12 µm,
- the outside diameter of the sheath (3) is 0.2 mm to 1.2 mm,
- the ratio D/d between the outside diameter D of the sheath (3) and the diameter d of the glass fibre (1) is 2 to 6, and
- after termination of the process, a pressure of the sheath (3) on the glass fibre (1) is such that essentially no relative movement between the glass fibre (1) and the sheath (3) can occur.

11. Method according to claim 10, wherein parameters of extrusion are chosen so that, after termination of the process, the pressure of the sheath (3) on the glass fibre (1) is at least 120 N/mm².

12. Method according to claim 10, wherein the step of providing a glass fibre (1) comprises the step (S1) of providing a glass core (5) having the Bragg grating (2) and the step (S2) of applying a coating (6) of inorganic-organic hybrid polymer onto the glass core (5).

13. Method according to claim 10, wherein the inorganic filler is a silicate.

14. Method according to claim 10, wherein the inorganic filler is a laminated silicate.

15. Method according to claim 10, wherein the inorganic filler is talcum, chalk, calcium carbonate, barium sulfate, boron nitride, silicon dioxide or bentonite.

## Revendications

1. Dispositif optique de mesure d'allongement comprenant une fibre de verre (1) pourvue d'un réseau de Bragg (2) et d'une gaine (3), **caractérisé en ce que**:
- la gaine (3) présente la composition suivante: un mélange de polyétheréthercétone et d'une charge inorganique dans un mélange d'au moins 10 pour cent en poids et d'au plus 40 pour cent en poids avec une taille de grain allant de 0,08 µm à 12 µm,
- le diamètre extérieur de la gaine (3) est compris entre 0,2 mm et 1,2 mm,
- le rapport D/d entre le diamètre extérieur D de la gaine (3) et le diamètre d de la fibre de verre (1) est compris entre 2 et 6, et
- une pression de la gaine (3) sur la fibre de verre (1) est telle qu'il n'y a pratiquement pas de mouvement relatif entre la fibre de verre (1) et la gaine (3).

2. Dispositif optique de mesure d'allongement selon la revendication 1, dans lequel la pression de la gaine (3) sur la fibre de verre (1) est d'au moins 120 N/mm².

3. Dispositif optique de mesure d'allongement selon la revendication 1, dans lequel la fibre de verre (1) se compose d'un coeur en verre (5) avec un revêtement (6) en polymère hybride inorganique-organique.

4. Dispositif optique de mesure d'allongement selon la revendication 1, dans lequel la charge inorganique est un silicate.

5. Dispositif optique de mesure d'allongement selon la revendication 1, dans lequel la charge inorganique est un silicate lamellaire.

6. Dispositif optique de mesure d'allongement selon la revendication 1, dans lequel la charge inorganique est du talc, de la craie, du carbonate de calcium, du sulfate de baryum, du nitrure de bore, du dioxyde de silicium ou de la bentonite.

7. Dispositif optique de mesure d'allongement selon la revendication 1, dans lequel le mélange de la charge inorganique est compris entre au moins 25 pour cent en poids et au plus 40 pour cent en poids.

8. Dispositif optique de mesure d'allongement selon la revendication 1, dans lequel le mélange de la charge inorganique est compris entre au moins 27 pour cent en poids et au plus 33 pour cent en poids.

9. Dispositif optique de mesure d'allongement selon la revendication 1, dans lequel la taille de grain est comprise entre au moins 0,1 µm et au plus 10 µm.

10. Procédé de fabrication d'un dispositif optique de mesure d'allongement, comprenant les étapes suivantes:
- fournir (S1, S2) une fibre de verre (1) pourvue d'un réseau de Bragg (2), et
- extruder (S3) une gaine (3) sur la fibre de verre (1), ceci étant **caractérisée en ce que**:
- la gaine (3) présente la composition suivante: un mélange de polyétheréthercétone et d'une charge inorganique dans un mélange d'au moins 10 pour cent en poids et d'au plus 40 pour cent en poids avec une taille de grain allant de 0,08 µm à 12 µm,
- le diamètre extérieur de la gaine (3) est compris entre 0,2 mm et 1,2 mm,
- le rapport D/d entre le diamètre extérieur D de la gaine (3) et le diamètre d de la fibre de verre (1) est compris entre 2 et 6, et
- en fin de procédé, une pression de la gaine (3) sur la fibre de verre (1) est telle qu'il n'y a pratiquement pas de mouvement relatif entre la fibre de verre (1) et la gaine (3).

11. Procédé selon la revendication 10, dans lequel des paramètres d'extrusion sont choisis de manière qu'en fin de procédé, la pression de la gaine (3) sur la fibre de verre (1) est d'au moins 120 N/mm².

12. Procédé selon la revendication 10, dans lequel l'étape de fournir une fibre de verre (1) comprend l'étape (S1) de fournir un coeur en verre (5) pourvu du réseau de Bragg (2) et l'étape (S2) de revêtir le coeur en verre (5) avec un revêtement (6) en polymère hybride inorganique-organique.

13. Procédé selon la revendication 10, dans lequel la charge inorganique est un silicate.

14. Procédé selon la revendication 10, dans lequel la charge inorganique est un silicate lamellaire.

15. Procédé selon la revendication 10, dans lequel la charge inorganique est du talc, de la craie, du carbonate de calcium, du sulfate de baryum, du nitrure de bore, du dioxyde de silicium ou de la bentonite.
